# EUROPEAN PATENT APPLICATION

(11) **EP 0 962 376 A1**
(43) Date of publication of application: **08.12.1999**
(21) Application number: 99303098.0
(22) Date of filing: 21.04.1999
(51) Int. Cl.: B62B 5/00, B62B 3/06

(54) **Wheel drive device for hand forklifts**

(30) Priority: 05.06.1998 KR 9809604
(71) Applicant: Jang, Jae Young, Damyang-kun, Jeollanamdo (KR)
(72) Inventor: Jang, Jae Young, Damyang-kun, Jeollanamdo (KR)
(74) Representative: Orr, William McLean

(57) **Abstract**

The wheel drive device is added to a conventional hydraulic system having an actuation lever (11) and a main cylinder (10). The main cylinder (10) is operated in conjunction with a pumping action of the actuation lever (11), thus selectively supplying pressurized oil to a fork drive cylinder (20) through an oil supply line and ascending the pallet forks to a height. In the wheel drive device, a neutral valve (60) is mounted to the oil supply line and is connected to a wheel drive cylinder through another oil line. The oil passages of the neutral valve (60) are switchable so as to selectively supply the pressurized oil from the main cylinder to the wheel drive cylinder in place of the fork drive cylinder, thus extending the piston rod of the wheel drive cylinder. A rack gear (31) is fixed to the piston rod of the wheel drive cylinder, while a pinion gear (41) is concentrically fixed to the rotating axle of the wheels. The pinion gear engages with the rack gear, thus being rotatable along with the wheels.

## Description

### BACKGROUND OF THE INVENTION

### Field of the Invention

The present invention relates, in general, to hand forklifts used for moving goods placed on pallets and, more particularly, to a drive device for wheels of such forklifts, the device being capable of easily starting to rotate the wheels of such a forklift, thus being convenient to users while moving goods using the forklifts.

### Description of the Prior Art

As well known to those skilled in the art, hand forklifts are hauling equipment designed to move goods, placed on pallets, in a somewhat short distance while being manually operated. Such forklifts are thus particularly and preferably used for moving goods within limited areas, such as warehouses, limited cargo aprons, factories, etc.

Such forklifts may be designed to be motor-operated. However, most of known hand forklifts are designed to be hand-operated. Regardless of the types of hand forklifts, it is typical for the forklifts to be provided with a hydraulic system for moving the pallet forks in a vertical direction.

However, known hand forklifts are problematic in that it is somewhat difficult to initially move the forklifts since such a forklift forces users to put force their strength to start to rotate the wheels. The known hand forklifts are thus inconvenient to users. U.S. Patent No. 4,997,195 discloses a forklift designed to solve the problem.

In the said U.S. patent, it is necessary to hydraulically ascend the pallet forks to a predetermined height, with goods being placed on the forks, prior to initially moving the forklift. In such a case, the wheels of the forklift are initially rotated by the weight of the goods placed on the forks. That is, the wheels of the forklift are rotated by the potential energy of the goods which is converted into a rotating force of the wheels. The above forklift is somewhat effectively used for moving heavy goods. However, in the case of moving goods while repeatedly stopping and moving the forklift, it is necessary to repeatedly ascend heavy goods by hydraulically lifting the forks. This is inconvenient to users.

### SUMMARY OF THE INVENTION

Accordingly, the present invention has been made keeping in mind the above problems occurring in the prior art, and an object of the present invention is to provide a wheel drive device for hand forklifts, which is easily installed in a conventional hand forklift and easily rotates the wheels of the forklift, thus allowing a user to easily operate the forklift while moving goods with the forklift being repeatedly stopped and moved.

In order to accomplish the above object, the present invention provides a wheel drive device for hand forklifts, which is used with a conventional hand forklift without changing the construction of the forklift to a considerable degree, and which is easily operated while conserving labor.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a rear perspective view of a hand forklift provided with a wheel drive device in accordance with the preferred embodiment of the present invention; and
Fig. 2 is a view, showing a hydraulic system of the hand forklift of the invention.

### DESCRIPTION OF THE PREFERRED EMBODIMENTS

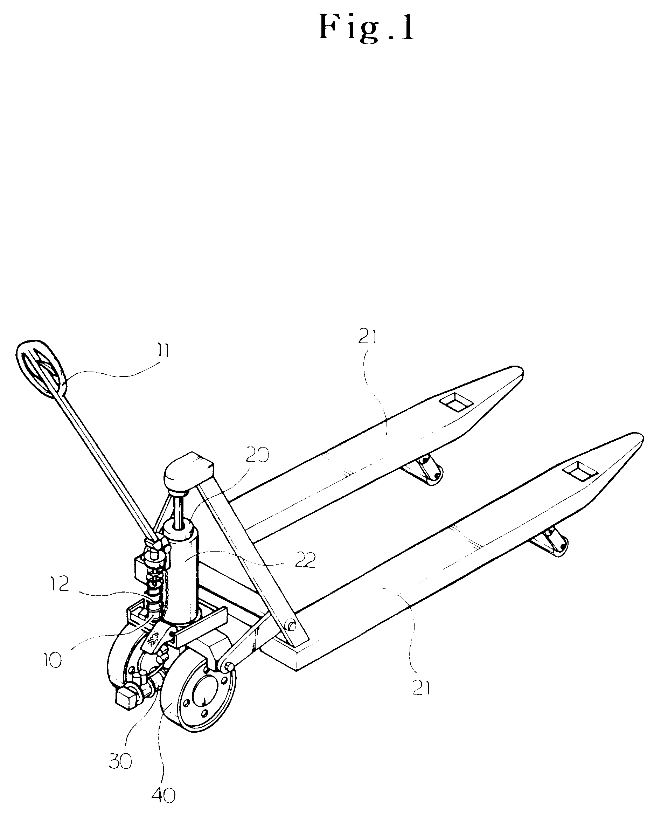

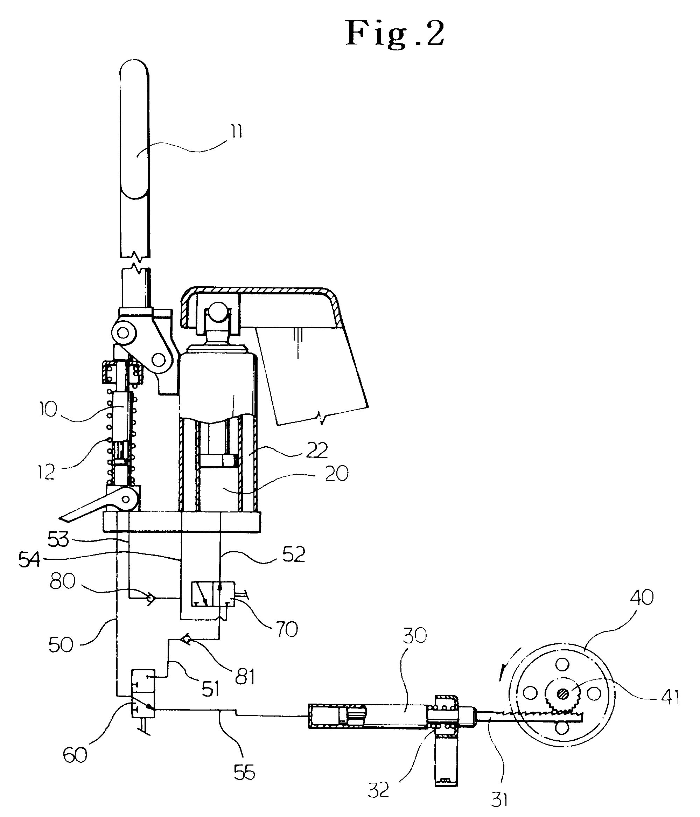

Fig. 1 shows a hand forklift provided with a wheel drive device in accordance with the preferred embodiment of this invention. Fig. 2 is a view, showing a hydraulic system of the above forklift.

As shown in the drawings, the wheel drive device of this invention is added to a conventional hydraulic system which is originally designed to be used for operating two pallet forks 21 of the forklift. The hydraulic system comprises a main cylinder 10 operated in conjunction with an actuation lever 11. The above lever 11 is also used as a handle of the forklift. The main cylinder 10 is connected to the lower chamber of a fork drive cylinder 20 through three oil lines or first to third lines 50, 51 and 52. The first to third lines 50, 51 and 52 thus form an oil supply line for the fork drive cylinder 20. The main cylinder 10 is also connected to an oil tank 22 through two oil lines or fourth and fifth lines 53 and 54. A first check valve 80 is mounted on a position of the fourth and fifth lines 53 and 54, while both a second check valve 81 and a return valve 70 are mounted on the second and third lines 51 and 52.

In order to provide the wheel drive device of the invention, a neutral valve 60 is mounted on the oil supply line at a position between the first and second lines 50 and 51. The above neutral valve 60 is also connected to a wheel drive cylinder 30 through a sixth oil line 55. A rack gear 31 is axially fixed to the piston rod of the drive cylinder 30, thus being operated in conjunction with the drive cylinder 30. Meanwhile, a pinion gear 41 is concentrically fixed to a rotating axle of two wheels 40 and engages with the rack gear 31. The two wheels 40 are thus rotatable by the drive cylinder 30.

The main and drive cylinders 10 and 30 are respectively provided with return springs 12 and 32 for normally biasing the piston rods of the two cylinders 10 and 30 to their original positions.

The return valve 70 is provided with a first select lever (not shown) for allowing a user to switch the oil passages of the valve 70 between a fork lifting mode and an oil drainage mode as desired. It is thus possible for the user to selectively ascend or descend the pallet forks 21. In the same manner, the neutral valve 60 is provided with a second select lever (not shown) for allowing a user to switch the oil passages of the valve 60 between a fork drive mode and a wheel drive mode. The neutral valve 60 thus allows a user to selectively operate the pallet forks 21 or the drive wheel 40.

The two check valves 80 and 81 are used for allowing pressurized oil to flow in a unidirection through the oil lines as well known to those skilled in the art. The pinion gear 41, engaging with the rack gear 31, is provided with a holdfast unit (not shown) . The holdfast unit is for preventing the pinion gear 41 from being undesirably rotated in a reverse direction.

In order to ascend the pallet forks 21, the sixth line 55 is closed by operating the select lever of the neutral valve 60 prior to manually ascending the actuation lever 11. In such a case, actuation oil is supplied from the oil tank 22 into the main cylinder 10 through the fifth and fourth lines 54 and 53. Thereafter, the actuation lever 11 is manually descended, thus allowing the pressurized oil from the main cylinder 10 to pass through the first line 50, the neutral valve 60 and the second and third lines 51 and 52 in order prior to acting on the lower surface of the piston of the fork drive cylinder 20. The piston of the fork drive cylinder 20 along with the pallet forks 21 is thus ascended to a height. Such an ascending and descending action of the actuation lever 11 is a so-called pumping action. The pumping action of the actuation lever 11 is repeated until the forks 21 reach a desired height.

In order to descend the forks 21, the oil passages of the return valve 70 are switched by operating the select lever of said valve 70, thus allowing the piston of the fork drive cylinder 20 to be naturally descended by the weight of goods loaded on the forks 21. In such a case, the actuation oil from the cylinder 20 passes through the third line 52, the return valve 70 and the fifth line 54 prior to being recovered by the tank 22. The forks 21 are descended to their original positions.

In order to rotate the wheels 40 of the forklift, the second line 51 is closed by operating the select lever of the neutral valve 60 prior to manually ascending the actuation lever 11. In such a case, the actuation oil is supplied from the oil tank 22 into the main cylinder 10 through the fifth and fourth lines 54 and 53. Thereafter, the actuation lever 11 is manually descended, thus allowing the pressurized oil from the main cylinder 10 to pass through the first line 50, the neutral valve 60 and the sixth lines 55 in order prior to acting on the left-side surface of the piston of the wheel drive cylinder 30. The piston rod of the wheel drive cylinder 30 thus extends from the cylinder to a length. This makes the rack gear 31, axially integrated with the piston rod, linearly move to the right in Fig. 2. The pinion gear 41, engaging with the rack gear 31, is thus rotated counterclockwise in the drawing. The two wheels 40, concentrically integrated with the pinion gear 41, are rotated in the same direction and easily start to move the forklift forward.

The pumping action of the actuation lever 11 may be repeated until the forklift reaches a desired place. However, it is somewhat easy to further move the forklift after the wheels 40 are initially rotated. In such a case, the forklift may be moved by a user while stopping such a pumping action of the lever 11.

As described above, the present invention provides a wheel drive device for hand forklifts. The wheel drive device of this invention is added to a conventional hydraulic system originally designed to drive a fork drive cylinder. Therefore, the hydraulic system, operated in conjunction with a pumping action of an actuation lever, selectively supply pressurized oil to the fork drive cylinder or the wheel drive device. The wheel drive device of this invention easily rotates the wheels of a forklift, thus allowing a user to easily and effectively operate the forklift while moving goods with the forklift being repeatedly stopped and moved.

In order to start a movement of the forklift of this invention, pressurized oil is supplied from the main cylinder to the wheel drive cylinder by pumping the actuation lever. Since it is somewhat easy to further move the forklift after the forklift is initially moved, the forklift may be moved by a user while stopping such a pumping action of the actuation lever. Of course, when it is necessary to start to move the forklift after stopping the forklift for a time, the forklift may be easily started to move by a pumping action of the actuation lever.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A wheel drive device for a hand-operated forklift, comprising:
an actuation lever having a pumping function for energising the hydraulic circuit;
a main cylinder operate in conjunction with the actuation lever so as to selectively supply pressurized oil to a fork drive cylinder through an oil supply line, thus ascending pallet forks of the forklift to a required height;
a neutral valve mounted to said oil supply line and connected to a wheel drive cylinder through another oil line, with oil passages of said neutral valve being switchable so as to selectively supply the pressurized oil from the main cylinder to said wheel drive cylinder in place of the fork drive cylinder, thus extending a piston rod of the wheel drive cylinder;
a rack gear mounted to the piston rod of said wheel drive cylinder, thus being linearly movable in conjunction with the wheel drive cylinder; and
a pinion gear concentrically mounted to a rotating axle of wheels of said forklift and engaging with the rack gear, thus being rotatable along with the wheels in conjunction with the rack gear.

2. A hand-operated forklift having a pair of pallet forks, means for raising and lowering the pallet forks, a wheelset for supporting the forklift, a driving device for applying motion to the wheelset, and a hydraulic circuit for controlling the operation of the forklift, and in which the forklift further comprises:
an actuation lever having a pumping function for energising the hydraulic circuit;
a master piston/cylinder unit operable following actuation of said lever;
a first slave piston/cylinder unit for raising and lowering the pallet forks;
a second slave piston/cylinder unit for operating said driving device; and
means selectively operable to switch the supply of pressurised fluid from the master unit to the first slave unit or to the second slave unit according to the required operation of the forklift.

3. A forklift according to claim 2, in which the driving device comprises a rack and pinion drive coupling.

4. A forklift according to claim 3, in which the rack is coupled with said second slave unit, and a pinion gear is mounted on a drive axle of the wheelset.

5. A forklift according to claim 3 or 4, in which the second slave unit is operative to apply linear movement to said rack.

6. A forklift according to claim 5, in which a piston rod of the second slave unit is coupled with said rack.

7. A forklift accordiong to anyone of claims 2 to 6, in which said means comprises a valve which is operative to route pressure fluid along one pressure line to operate the first slave unit and thereby raise the pallet forks, and being switchable to route pressure fluid along a further pressure line to operate the second slave unit and thereby initiate driving movement of the wheel set.
